# EUROPÄISCHE PATENTSCHRIFT

(11) **EP 1 170 266 B1**
(45) Veröffentlichungstag und Bekanntmachung des Hinweises auf die Patenterteilung: **01.09.2004**
(21) Anmeldenummer: 00114647.1
(22) Anmeldetag: 07.07.2000
(51) Int. Cl.: C04B 18/30

(54) **Blähfähiges Stoffgemisch zur Herstellung eines Leichtgranulats**
Swellable composition for producing light-weight granules
Composition gonflable pour la fabrication de granulats légers

(43) Veröffentlichungstag der Anmeldung: 09.01.2002
(73) Patentinhaber: Optiroc Group AB, 19129 Sollentuna (DE)
(72) Erfinder: Muschalla, Thomas, 21745 Hemmoor (DE)
(74) Vertreter: Emmel, Thomas, Dipl.-Biol., Dr.

(56) Entgegenhaltungen:
- DE-A- 2 739 493
- DE-A- 3 339 575
- US-A- 4 501 446
- DATABASE WPI Section Ch, Week 197907 Derwent Publications Ltd., London, GB; Class L02, AN 1979-13242B XP002156401 & JP 54 003831 A (ASAHI GLASS CO LTD), 12. Januar 1979 (1979-01-12)

## Beschreibung

Die Erfindung bezieht sich auf ein Stoffgemisch zur Herstellung eines Leichtgranulats nach dem Oberbegriff des Anspruches 1.

Bei üblichen Leichtgranulaten handelt es sich in der Regel um sogenannte Blähtone, die ausgehend von blähfähigen tonhaltigen Ausgangsmaterialien, z.B. frühsinternde Tone oder Lehme, hergestellt werden. Geeignete tonhaltige Ausgangsmaterialien werden im folgenden auch als natürlich blähfähige Tone bezeichnet.

Das Ausgangsmaterial wird vermahlen, auf einen vorgegebenen Wassergehalt eingestellt und dann zu kugelförmigen Formlingen granuliert bzw. zu zylindrischen Formlingen pelletiert. Gegebenfalls werden während der Aufbereitung Mineralien, Flußmittel und Katalysatoren wie z.B. Metall-Oxide, Alkalien etc. und gasbildende Substanzen zugesetzt, falls diese Substanzen nicht oder nicht in ausreichendem Maße in den natürlich blähfähigen Tonen enthalten sind.

Die Formlinge werden dann auf eine Temperatur zwischen 1000 bis 1200 C° aufgeheizt, wobei ihre Zusammensetzung so beschaffen sein muß, daß sich in diesem Temperaturbereich eine pyroplastische Sinterhülle auf der Außenhaut bildet und die Formlinge noch ausreichend viskos sind, daß sie durch im Inneren entstehende Gase aufgebläht werden können.

Die Mischungsrelationen, in denen die einzelnen Substanzen in dem Ausgangsmaterial enthalten sein müssen, sind z.B. im "Handbuch der Keramik" (Verlag Schmid GmbH) in dem von: Kromer und Potschigmann verfaßten Kapitel "Blähton" angegeben. Für den Fachmann maßgeblich ist z.B. das sogenannte Dreistoffdiagramm, das die für blähfähige Gemische erforderliche Mischungsrelation zwischen SiO_{2,} Al₂O₃ und Flußmittel vorgibt.

Blähtone oder Leichtgranulate weisen bei meist kugeliger Kornform eine dicht gesinterte Außenhaut und eine sehr hohe Festigkeit bei geringer Dichte auf. Leichtgranulate eignen sich z.B. als Leichtzuschlagstoff in Beton, als lose Schüttungen für Isolierungszwecke im Straßenbau oder geotechnische Bauwerke etc.

In letzter Zeit ist man dazu übergegangen, bei der Herstellung von Leichtgranulaten Sekundärrohstoffe einzusetzen, die in anderen Industrien als Abfall anfallen unter gleichzeitiger Reduzierung des eingesetzten Anteiles an natürlich blähfähigen Tonen.

In diesem Zusammenhang beschreibt die **GB 2133000 A** ein gattungsgemäßes Stoffgemisch zur Herstellung von Leichtgranulaten, das zwischen 10% und 80% blähfähigem Ton, zwischen 1% und 5% Altöl und als Füller Gewässersedimente und/oder Rotschlamm enthalten kann.

Nachteilig an dem gattungsgemäßen Gemisch ist, daß nach wie vor ein relativ hoher Anteil an natürlich blähfähigem Ton zwingend enthalten sein muß, um die chemisch mineralischen Reaktionen zur Herstellung eines Leichtgranulats ablaufen zu lassen (da sonst die physikalischen Eigenschaften eines Leichtgranulats nicht erreicht werden). Die Verarbeitung von Ausgangsmaterialien, die natürlich blähfähigen Ton enthalten, ist im Hinblick auf Gewinnung, Transport etc. relativ kostenintensiv.

Aufgabe der Erfindung ist es daher, ein Stoffgemisch zur Herstellung von Leichtgranulat zu schaffen, bei dem gegenüber dem Stand der Technik vollständig auf natürlich blähfähigen Ton verzichtet werden kann und der Anteil der eingesetzten Sekundärrohstoffe noch weiter erhöht ist unter Erzielung der physikalischen Eigenschaften natürlich blähfähiger Granulate.

Gelöst wird diese Aufgabe mit einem Gemisch, das die kennzeichnenden Merkmale des Anspruches 1 aufweist.

Vorteilhaft ausgestaltete Gemische sind in den Unteransprüchen angegeben.

Nach Anspruch 1 ist vorgesehen, daß das erfindungsgemäße Stoffgemisch bezogen auf die Trockensubstanz 50% bis 70% vorklassiertes Gewässersediment, 5% bis 20% Rotschlamm, 5% bis 20% mineralölhaltige Bleicherde und 2% bis 10% Aluminiumhydroxyd enthält.

Weiterhin enthalten sind 5% bis 20% eines Materials, das zwischen 25% bis 75% SiO₂ und zwischen 20% bis 45% an Flußmittel (in beiden Fällen bezogen auf die Trockensubstanz) enthält.

Bevorzugt wird in diesem Zusammenhang gemäß einer Ausgestaltung der Erfindung gemahlenes Glas eingesetzt, das frei von Metall, Kunststoff und anderen Fremdkomponenten ist, vorzugsweise z.B. gemahlenes Recyclingglas.

In einer weiteren bevorzugten Ausgestaltung ist es z.B. aber auch möglich, ein aus dem beim Wollewaschen anfallenden Waschwasser nach Verfeuerung und anschließernder Lösung der Asche gewinnbares nicht lösliches Material einzusetzen. Ein solches Material fällt z.B. bei dem von der "Bremer Woll Kämmerei" (BWK) durchgeführten Wollwaschverfahren an. Im folgenden wird auf dieses Material unter der Bezeichnung "ALKA BWK" Bezug genommen, was einem Fachmann eine ausreichend sichere Identifizierung ermöglicht.

In beiden Fällen (gemahlenes Glas oder ALKA BWK) handelt es sich um Sekundärrohstoffe aus vollkommen unterschiedlichen Gebieten, die beide gleichermaßen geeignet sind. Weitere geeignete SiO₂- und Flußmittelhaltige Materialien, die als aus anderen technischen Prozessen stammen, lassen sich vom Fachmann durch entsprechende Analysen etc. auffinden.

So fällt z.B. in einem Vorschritt beim Wollewaschen sedimentierter Sand an, der ebenfalls in erfindungsgemäßen Gemischen eingesetzt werden kann. Dieser Sand ist in einer als Beispiel angegebenen Mischung enthalten und dort als Sediment-Sand (BWK) bezeichnet.

Der besondere Vorteil des erfindungsgemäßen Gemisches besteht jedoch darin, daß in ihm überhaupt kein bzw. ein äußerst reduzierter Anteil an natürlich blähfähigem Ton enthalten sein kann.

Erfindungsgemäß ist nämlich vorgesehen, daß das Gemisch weniger als 10% an natürlich blähfähigen Ton enthält, wobei auf jeden Fall der Anteil an natürlich blähfähigen Ton so weit reduziert ist, daß er für sich gesehen nicht mehr den Ablauf der chemisch mineralogischen Reaktionen zur Bildung von Leichtgranulaten verantwortlich beeinflussen kann.

Im Gegensatz zum Stand der Technik ist in dem erfindungsgemäßen Gemisch damit erstmals der Anteil an natürlich blähfähigen Ton so weit reduzierbar, daß er nicht mehr verantwortlich für den Ablauf der chemisch mineralogischen Reaktionen zur Bildung von Leichtgranulaten ist. Der Ablauf wird vielmehr durch die spezielle vorgeschlagenen Mischung an Sekundärrohstoffen bestimmt.

In besonders bevorzugten Ausgestaltungen der Erfindung wird überhaupt kein natürlich blähfähiger Ton mehr zugesetzt. In diesem Fall besteht das erfindungsgemäße Gemisch ausschließlich aus Sekundärrohstoffen und erlaubt dennoch aufgrund der speziell ausgewählten Komponenten und ihrer Konzentrationen die Herstellung eines Leichtgranulats, das in seinen maßgeblichen physikalischen Eigenschaften vergleichbar ist mit herkömmlichen Blähton-Produkten.

Wesentlicher Bestandteil des erfindungsgemäßen Stoffgemisches sind vorklassierte Gewässersedimente, z.B. Baggergut aus Hafenbecken, Fluß- bzw Kanalbetten, Flußdelten oder Meeresbuchten (Fjorde) um nur einige Beispiele zu nennen. Die vorklassierten Gewässersedimente sind vorzugsweise frei von Sand und weisen in der Regel eine Körnung mit einem (korngrößenanalytisch bestimmten) mittleren Durchmesser von < 80 µm auf.

Geeignet sind theoretisch alle Gewässersedimente, die aus beliebigen europäischen oder außereuropäischen Gewässern, Häfen etc. gewonnen werden können. Bislang untersucht wurden von der Anmelderin spezielle Sedimente aus den Stadtbremischen Häfen. Ähnliche Bedingungen lassen sich aber auch in einer Vielzahl weiterer Gewässer finden, so z.B. insbesondere in den Häfen von Amsterdam, Rotterdam oder Antwerpen oder im Oslofjord bzw. der Themsemündung, um nur einige Beispiele zu nennen.

Dabei kann grundsätzlich davon ausgegangen werden, daß die gewinnbaren, vorklassierten Gewässersedimente in der Regel die für eine befriedigende Blähcharakteristik erforderlichen Mineralien enthalten.

Die erforderlichen Flußmittel und Katalysatoren sind dagegen nicht enthalten und werden durch den im erfindungsgemäßen Gemisch eingesetztem Rotschlamm bereitgestellt. Rotschlamm (auch Rotmasse) ist ein Standardbegriff, der das in Aluminiumoxidfabriken anfallende Rückstandsmaterial bezeichnet, das die beim alkalischen Extraktionsprozeß nicht gelösten Bestandteile des Bauxit enthält. Wesentliche Bestandteile sind Al₂O₃, Fe₂O₃, SiO₂ sowie Na₂O und CaO + MgO.

Die für das Blähen erforderlichen reduzierbaren Kohlenstoffverbindungen werden durch in dem erfindungsgemäßen Gemisch vorgesehene mineralölhaltige Bleicherde bereitgestellt. Bleicherden sind kolloidale, feinst zerteilte, wasserhaltige Aluminium-Magnesium-Silikate (aus der Montmorillonit-Gruppe), die insbesondere als Mineralölfilter etc. Einsatz finden. Nach Gebrauch enthalten sie Mineralölbestandleile. Erfindungsgemäß können Bleicherden mit einer Ölbelastung ab 10% bis 40% eingesetzt werden. Vorzugsweise werden mineralölhaltige Bleicherden eingesetzt, die aus der Mineralölraffination stammen.

Als weitere Komponenten werden oxidierte Aluminiumverbindungen, insbesondere Aluminiumhydroxydpulver zugesetzt, um die nach dem sogenannten Dreistoffdiagramm für blähfähige Gemische erforderliche Mischungsrelation zwi schen SiO₂, Al₂O₃ und Flußmittel in den vorgegebenen Grenzen einzustellen. Aluminiumhydroxyd fällt z.B. als Industrieschlamm bei unterschiedlichen Prozessen an.

Im folgenden sollen einige bevorzugt eingesetzte Stoffgemische beispielhaft beschrieben werden. Angegeben sind jeweils der betreffende Stoff mit ggf. einer Angabe, die seine Herkunft erläutert, sowie der Anteil des Stoffes in dem Gemisch in % bezogen auf die Trockensubstanz.

| | | |
|---|---|---|
| **A**) | Hafensediment Bremen | 50,0% |
| | Bleicherde Dollbergen | 15,0% |
| | Sediment-Sand (BWK) (s. S.4, 2.Abs.) | 5,0% |
| | Aluminiumhydroxid Condea | 5,0% |
| | Rotschlamm AOS Stade | 10,0% |
| | ALKA BWK (s. S4, 1. Abs.) | 15,0% |

| | | |
|---|---|---|
| **B**) | Hafensediment Bremen | 60,0% |
| | Bleicherde Dollbergen | 12,0% |
| | Aluminiumhydroxid Condea | 4,0% |
| | Rotschlamm AOS Stade | 12,0% |
| | ALKA BWK | 4,0% |

| | | |
|---|---|---|
| **C**) | Hafensediment Bremen | 60,0% |
| | Bleicherde Dollbergen | 12,0% |
| | Aluminiumhydroxid Condea | 4,0% |
| | Rotschlamm AOS Stade | 12,0% |
| | Glaspulver | 4,0% |

| | | |
|---|---|---|
| **D**) | Hafensediment Bremerhaven | 15,0% |
| | Hafensediment Bremen | 45,0% |
| | Bleicherde Dollbergen | 12,0% |
| | Aluminiumhydroxid Condea | 4,0% |
| | Rotschlamm AOS Stade | 12,0% |
| | ALKA BWK | 4,0% |

Die Stoffgemische A-D wurden mit aus dem Stand der Technik bekannten Verfahren aufbereitet und zu Leichtgranulaten verarbeitet, wobei an dieser Stelle noch einmal darauf hingewiesen werden soll, daß keinem der Stoffgemische natürlich blähfähiger Ton zugesetzt wurde.

Die wesentlichen Schritte bekannter Verfahren, die im Detail z.B. in dem oben erwähnten "Handbuch der Keramik" beschrieben sind, sind im folgenden kurz zusammengefaßt:

Die eingesetzten Sekundärrohstoffe werden in geeigneten Anlagen getrocknet und entsprechend der Rezeptur vermischt und homogenisiert. Anschließend wird das Homogenisat granuliert bzw. pelletiert. Die Granulate bzw Pellets werden dann dem üblichen zweistufigen thermischen Prozeß unterzogen, 1. Stufe: Trocknung und Aufheizung; 2. Stufe: Sintern und Aufblähen

Die auf diese Weise aus den oben genannten Gemischen hergestellten Blähgranalien wiesen eine übliche Blähtoncharakteristik auf.

## Patentansprüche

1. Blähfähiges Stoffgemisch zur Herstellung eines Leichtgranulates enthaltend Gewässersedimente, Rotschlamm und Mineralöl, **dadurch gekennzeichnet, daß** das Gemisch bezogen auf die Trockensubstanz folgenden Substanzen enthält:
- 50% bis 70% vorklassiertes Gewässersediment,
- 5% bis 20% Rotschlamm,
- 5% bis 20% mineralölhaltige Bleicherde,
- 2% bis 10% Aluminiumhydroxyd
- 0% bis 10% natürlich blähfähigen Ton und
- 5% bis 20% eines Materials, das zwischen
25% bis 75% SiO₂ und
20% bis 45% an Flußmittel enthält.

2. Stoffgemisch nach Anspruch 1, **dadurch gekennzeichnet, daß** der Anteil an natürlich blähfähigen Ton < 5% ist.

3. Stoffgemisch nach Anspruch 1 oder 2, **dadurch gekennzeichnet, daß** kein natürlich blähfähiger Ton zugesetzt ist.

4. Stoffgemisch nach einem der vorhergehenden Ansprüche, **dadurch gekennzeichnet,** da**ß** das SiO₂- und flußmittelhaltige Material gemahlenes Glas ist.

5. Stoffgemisch nach einem Ansprüche 1 bis 4, **dadurch gekennzeichnet, daß** das SiO₂- und flußmittelhaltige Material ALKA BWKist.

## Claims

1. Expandable mixture of materials for producing a light-weight granule comprising body of water sediments, red mud and mineral oil, **characterised in, that** the mixture referring to the dry substance includes the following substances:
- 50% - 70% pre-classified body of water sediment
- 5% to 20% red mud
- 5% to 20% fullers earth containing mineral oil
- 2% to 10% aluminium hydroxide
- 0% to 10% natural expandable clay and
- 5 to 20% of a material containing between
25% to 75% SiO₂ and
20% to 45% fluxing agent.

2. Mixture of materials according to claim 1, **characterised in, that** the ratio of natural expandable clay is < 5%.

3. Mixture of materials according to claim 1 or 2, **characterised in that** no natural expandable clay is added.

4. Mixture of materials according to one of the previous claims, **characterised in, that** the material containing SiO₂ and fluxing agent is ground glass.

5. Mixture of materials according to one of the claims 1 to 4, **characterised in that** the material containing SiO₂ and fluxing agent is ALKA BWK.

## Revendications

1. Mélange expansible de substances destiné à la fabrication d'un granulé léger contenant des sédiments aqueux, de la boue rouge et de l'huile minérale, **caractérisé en ce que** le mélange contient les substances suivantes relativement à la matière sèche :
- 50 % à 70 % de sédiment aqueux préclassé,
- 5 % à 20 % de boue rouge,
- 5 % à 20 % d'argile absorbante contenant de l'huile minérale
- 2 % à 10 % d'hydroxyde d'aluminium
- 0 % à 10 % d'argile naturellement expansible et
- 5 % à 20 % d'un matériau contenant de
25 % à 75 % de SiO₂ et de
20 % à 45 % d'un agent de fluxage.

2. Mélange de substances selon la revendication 1, **caractérisé en ce que** la fraction d'argile naturellement expansible est < 5 %.

3. Mélange de substances selon la revendication 1 ou 2, **caractérisé en ce qu'**il ne contient pas d'argile naturellement expansible.

4. Mélange de substances selon l'une des revendications précédentes, **caractérisé en ce que** le matériau contenant du SiO₂ et un agent de fluxage est du verre pulvérisé.

5. Mélange de substances selon l'une des revendications 1 à 4, **caractérisé en ce que** le matériau contenant du SiO₂ et un agent de fluxage est du ALKA BWK.
